(19) Europäisches Patentamt
European Patent Office
Office européen des brevets

(11)  **EP 1 989 235 B1**

(12)  **FASCICULE DE BREVET EUROPEEN**

(45) Date de publication et mention
de la délivrance du brevet:
**21.12.2016  Bulletin 2016/51**

(21) Numéro de dépôt: **07764517.4**

(22) Date de dépôt: **22.02.2007**

(51) Int Cl.:
***C08F 2/22*** *(2006.01)*    ***C08F 2/00*** *(2006.01)*
***C09D 133/00*** *(2006.01)*

(86) Numéro de dépôt international:
**PCT/EP2007/001526**

(87) Numéro de publication internationale:
**WO 2007/096159 (30.08.2007 Gazette 2007/35)**

(54) **DISPERSION AQUEUSE DE POLYMERE NANOCOMPOSITE A BASE DE SILICE**

WÄSSRIGE, SILICA-BASIERTE NANOVERBUNDSTOFF-POLYMER-DISPERSION

AQUEOUS SILICA-BASED NANOCOMPOSITE POLYMER DISPERSION

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **27.02.2006  FR 0601991**

(43) Date de publication de la demande:
**12.11.2008  Bulletin 2008/46**

(73) Titulaire: **Arkema France**
**92700 Colombes (FR)**

(72) Inventeurs:
• **ALBALAT PEREZ, Jordi**
**E-08032 Barcelone (ES)**
• **FONT I PANADES, Carme**
**E-08192 Sant Quirze del Valles (ES)**
• **LOZE, Jean-Yves**
**27300 SAINT-VICTOR-DE-CHRETIENVILLE (FR)**

(74) Mandataire: **Killis, Andréas et al**
**ARKEMA France**
**DRD/DPI**
**420, rue d'Estienne d'Orves**
**92705 Colombes Cedex (FR)**

(56) Documents cités:
**EP-A- 0 644 205        WO-A-03/000760**
**WO-A-2004/035473    WO-A-2005/000914**

## Description

La présente invention concerne une dispersion aqueuse de polymère nanocomposite spécifique à base de silice, son procédé de préparation, une composition de revêtement, en particulier de protection, contenant ladite dispersion, pour des applications nécessitant des performances élevées d'anti-corrosion, d'anti-abrasion et de résistance chimique.

Plus particulièrement, cette dispersion aqueuse selon l'invention est à base d'un polymère organique et de silice nanoparticulaire, ledit polymère étant obtenu par polymérisation en émulsion d'un mélange de monomères en présence d'une dispersion aqueuse de nanosilice spécifique, stable dans une plage de pH allant de 2 à 10 et ladite dispersion étant exempte de tout traitement de surface silané.

Or, un problème important à résoudre dans la préparation d'une dispersion aqueuse « hybride » telle que celle de l'invention à base d'un polymère et d'une nanosilice est la stabilité de ladite dispersion aqueuse hybride, afin d'éviter tout risque d'agglomération ou de gélification, soit dans les conditions de polymérisation en émulsion, soit dans les conditions de stockage ou d'utilisation finale de ladite dispersion. Les solutions connues de l'art antérieur sont essentiellement basées soit sur le pré-traitement des particules de silice par un agent de couplage type silane qui pose des problèmes de coût, de manipulation et d'étape supplémentaire, soit sur l'utilisation de monomères ou d'amorceurs ou de dispersants (stabilisants) à caractère cationique, mais dans ce cas, la dispersion finale obtenue n'est stable que dans une plage limitée de pH (basique).

WO 01/029106 décrit la préparation de dispersions aqueuses de particules composées d'un polymère et de particules solides inorganiques finement divisées. Le produit final est obtenu par polymérisation radicalaire du mélange de monomères en présence de silice. Le mélange de monomères comprend au moins un groupement amino, amido, uréido ou N-hétérocyclique dans le cas où les particules inorganiques dispersées ont une mobilité électrophorétique de signe négatif.

WO 03/000760 décrit également un tel procédé en présence d'au moins un dispersant anionique, cationique et non ionique.

La stabilisation des nanoparticules de silice par des monomères, amorceurs ou dispersants cationiques se fait généralement plus facilement dans une plage de pH basique. Par contre, il est difficile d'obtenir cette stabilisation à pH neutre ou acide car l'interaction de ces substances avec la surface des particules de silice chargées négativement reste insuffisante. Il est en effet important de noter que le milieu le plus couramment utilisé pour réaliser une polymérisation en émulsion est le milieu acide, puisqu'il conduit à des conversions de monomères plus élevées qu'en milieu basique.

WO 01/018081 décrit un procédé similaire dans lequel l'amorceur a une charge électrique de signe opposé à la mobilité électrophorétique des particules inorganiques dispersées. Quand les particules dispersées sont anioniques, l'amorceur est cationique, avec les inconvénients décrits antérieurement.

WO 04/035473 et WO 04/035474 décrivent un procédé de préparation d'une dispersion aqueuse stable comprenant un mélange d'au moins un composé silané et de particules de silice colloïdale pour former des particules colloïdales silanées, les particules silanées étant mélangées avec un liant organique pour former une dispersion aqueuse stable.

L'utilisation d'agents de couplage silanés nécessite un procédé en 2 étapes :

- la silanisation de la dispersion colloïdale des nanoparticules de silice,
- le mélange de la dispersion silanée de silice avec une dispersion de polymère organique.

Un tel procédé conduit à un taux de solide plus faible que celui de la présente invention, selon un procédé de polymérisation « in situ ».

La présente invention remédie aux insuffisances et inconvénients de l'état de l'art concernant ce problème, en proposant une dispersion aqueuse « hybride » de polymère nanocomposite spécifique, pour des revêtements, en particulier de protection, pour des applications nécessitant des performances élevées en termes d'effet anti-corrosion et/ou anti-abrasion et/ou de résistance chimique, avec un meilleur compromis de performances à l'usage. Déjà, sans utilisation de silice silanée, la présente invention par le choix spécifique de la dispersion de silice (stable dans une plage de pH de 2 à 10), du système d'amorceur et du procédé de polymérisation lié, conduit à une dispersion « hybride » finale stable pendant et après la polymérisation, au stockage ou dans les conditions d'utilisation applicative finale, dans une plage de pH large (acide à basique, y compris neutre) en l'absence d'agrégats ou d'agglomérats, et avec une parfaite homogénéité.

La dispersion aqueuse de polymère nanocomposite spécifique selon la présente invention convient particulièrement à la préparation de revêtements de protection, qui répondent de manière satisfaisante aux besoins et exigences suivantes :

- bonnes performances mécaniques, et notamment bonne dureté grâce à une augmentation de la densité de réticulation globale,

- bon compromis dureté/flexibilité : la dureté augmente, tout en conservant une flexibilité satisfaisante,
- stabilité thermique, résistance au feu, résistance chimique, et résistance à l'abrasion élevées,
- bon effet barrière à différents agents, ainsi qu'aux UV,
- bonne adhérence sur divers substrats, et plus particulièrement sur verre,
- effet stabilisant des particules de silice, permettant une moindre utilisation de tensioactifs,
- bonne compatibilité entre le polymère et les particules de nanosilice conduisant à un film hybride transparent et macroscopiquement homogène,
- bonne rigidité du film,
- bonne stabilité des formulations de revêtements avec bonne homogénéité et absence de toute gélification au cours du stockage ou de l'utilisation,
- avantages économiques, les particules de nanosilices ne nécessitant pas d'étape de traitement supplémentaire avec un agent de couplage/d'interface chimique qui posent des problèmes de coût et de manipulation.

La présente invention utilise un procédé de préparation sans étape de traitement de la nanosilice par une polymérisation en émulsion d'un mélange de monomères à caractère hydrophobe prédominant en présence d'une dispersion aqueuse spécifique de nanosilice (ou nanoparticules de silice) à caractère exclusivement anionique, laquelle silice n'a subi aucun traitement par des agents de couplage silanés, la dispersion aqueuse de silice ne comprenant aucun monomère ou amorceur ou dispersant cationique pouvant fonctionner comme stabilisant de ladite dispersion et ladite dispersion aqueuse de silice étant stable dans une plage de pH allant de 2 à 10.

Par rapport aux dispersions de l'état de l'art antérieur, les dispersions aqueuses hybrides selon la présente invention présentent l'avantage essentiel d'être stables (absence de gélification ou d'agrégats ou de sédimentation) lors de la polymérisation, du stockage ou de l'utilisation, sans avoir à utiliser des agents de couplage ou des monomères, amorceurs ou dispersants cationiques spéciaux qui posent des problèmes de surcoût et de mode opératoire complexe.

Le premier objet de la présente invention selon les revendications de 1 à 9 est une dispersion aqueuse de polymère nanocomposite (aussi appelée par la suite, dispersion aqueuse hybride) pouvant s'obtenir par polymérisation en émulsion d'au moins une composition de monomères en présence d'au moins une dispersion aqueuse de nanosilice (ou nanoparticules de silice), caractérisée essentiellement par la spécificité de la dispersion aqueuse de nanoparticules de silice et par le système d'amorceur utilisé.

Un deuxième objet de l'invention concerne un procédé de préparation de ladite dispersion selon les revendications de 10 à 14.

Un autre objet selon l'invention est une composition de revêtement selon les revendications de 15 à 17 comprenant au moins une dispersion aqueuse de polymère selon l'invention.

Un dernier objet selon l'invention est lié à une utilisation de ladite dispersion selon les revendications 18 et 19 dans des compositions de revêtement, en particulier pour peintures, vernis, encres ou adhésifs ou à une utilisation comme semence de polymère nanocomposite hydrodispersible, pour la préparation de latex structurés spécifiques.

Ainsi, le premier objet de l'invention est une dispersion aqueuse hybride de polymère nanocomposite obtenue par polymérisation en émulsion d'au moins une composition de monomères, en présence d'au moins une dispersion aqueuse de nanosilice (ou nanoparticules de silice),

- ladite composition de monomères étant ajoutée, en au moins une étape, dans le réacteur contenant déjà la dispersion aqueuse de nanoparticules de silice exempte de tout composé organique cationique parmi les monomères ou dispersants ou amorceurs pouvant fonctionner comme stabilisants desdites nanoparticules de silice,
- ladite dispersion de nanoparticules de silice étant :

  - à base de nanoparticules anioniques de silice, et exempte de tout agent de couplage, modifiée à l'aluminium et
  - stable dans une plage de pH allant de 2 à 10, stabilité exprimée en termes d'absence d'agrégats et/ou d'agglomérats et/ou de sédimentation, et

- ladite polymérisation en émulsion étant réalisée en présence d'au moins un système d'amorceur organique, libre de tout groupement ionique et en l'absence de tout monomère ou amorceur ou dispersant cationique.

L'expression « au moins un système d'amorceur, libre de tout groupement ionique » signifie que le système d'amorçage « dans son ensemble » est libre de tout groupement ionique.

La stabilité de la dispersion de nanoparticules de silice dans toute la plage de pH de 2 à 10 (cela veut dire stable à tout pH dans cette plage) peut être aussi évaluée par l'absence de gélification et plus particulièrement par l'absence d'augmentation de viscosité de plus de 10% par rapport à la valeur initiale après au moins 96 h à l'ambiante (23°C). US 2005/0020746 décrit, paragraphes 63 à 67, un test spécifique convenable pour une telle évaluation (voir résultats tableaux 1 et 2 de ce document).

De préférence, le mélange réactionnel de polymérisation (nanoparticules de silice + monomères) est stable pendant et après la polymérisation en terme d'absence de gélification ou d'agglomérats ou de sédimentation.

Les monomères pouvant convenir pour la polymérisation en émulsion sont ajoutés en au moins une étape dans le réacteur et peuvent être des mélanges de monomères choisis parmi les monomères usuels en polymérisation en émulsion, tels que les monomères acryliques (esters (méth)acryliques), vinyliques, allyliques, vinylaromatiques. Cette composition peut comprendre :

- des monomères fonctionnels à :

  - groupement carboxy, tels que l'acide (méth)acrylique, l'acide itaconique, l'acide crotonique, l'acide maléique, l'acide fumarique, l'acide vinylbenzoïque, ou
  - groupement amido, tels que le (méth)acrylamide, ou méthacrylamido-1 imidazolidinone-2 éthane
  - groupement nitrile, tels que le (méth)acrylonitrile
  - groupement hydroxyle, tels que les hydroxyalkyls (méth)acrylates
  - groupement ureido, tels que le méthacrylamide-éthyléthyleneurée ou éthylimidazolinone méthacrylate
  - groupement sulfonate, tels que les dérivés de l'acide 2-acrylamido-2-méthyl-propane sulfonique

- des monomères polyinsaturés comme agents de réticulation interne, (intraparticulaire) comme : des di(méth)acrylates d'alkylène glycols, ou
- des monomères précurseurs de réticulation (auto ou non) en post-polymérisation tels que la diacétone acrylamide (DAAM), la diacétone méthacrylamide, ou
- des (méth)acrylates portant des groupements acétoacétoxy comme le (méth)acrylate d'acétoacétoxyéthyle, ou
- des monomères portant des groupements silanes (monomères silanés) bloqués (alcoxy) hydrolysables et précurseurs d'auto-réticulation lors de la filmification.

Dans le cas de monomères précurseurs de réticulation, et en particulier dans le cas de monomères (méth)acrylates portant des groupements acétoacétoxy, la réticulation et la densité de réticulation augmentent avec ces monomères et les performances mécaniques (dureté, module et résistance chimique), ainsi que l'adhésion humide se trouvent alors encore significativement améliorées.

Lesdits monomères fonctionnels peuvent être présents dans une proportion variant de 0 à 5% en poids par rapport au total des monomères, sauf dans le cas plus particulier des monomères à groupement acétoacétoxy tels que le (méth)acrylate d'acétoacétoxyéthyle, qui peuvent être présents jusqu'à 30% en poids.

Dans le cas où les monomères fonctionnels sont des monomères silanés, dans ce cas le taux peut varier entre 0 et 2 et de préférence de 0,01 à 1% par rapport au total de monomères. La présence de ce type de monomères (silanés) permet de réduire significativement la perméabilité à l'eau du revêtement final obtenu, plus particulièrement pour des applications de revêtements de protection pour bois et produits dérivés.

La dispersion aqueuse hybride peut contenir en plus du polymère nanocomposite des (méth)acrylates multifonctionnels qui la rendent photoréticulable. Comme (méth)acrylates multifonctionnels, on peut citer les (méth)acrylates éthoxylés ou propoxylés di-, tri- ou tétra- fonctionnalisés, tels que le triacrylate de triméthylolpropane éthoxylé (Sartomer® SR 454), le tétra-acrylate de pentaérythritol éthoxylé (Sartomer® SR 494), le triacrylate de triméthylolpropane propoxylé (Sartomer® SR 492) ou le triacrylate de glycérol propoxylés (Sartomer® SR 9020).

Suivant une variante particulière de l'invention, ladite composition de monomères peut être ajoutée dans le réacteur, en au moins deux étapes, la composition de monomères de la 1ère étape pouvant être différente de la composition de monomères de la 2ème étape. De préférence, ladite composition peut être choisie de manière à obtenir des particules structurées de polymère nanocomposite et plus particulièrement des particules ayant une structure coeur/écorce. Les proportions entre le coeur et l'écorce varient de 50/50 à 90/10 pour 100 parties en poids de monomères. La Tg de chacune des phases coeur et écorce dépend de la morphologie et/ou des propriétés souhaitées, et varie entre -40°C et 150°C, et de préférence entre -25°C à 105°C. Plus particulièrement, les particules structurées coeur/écorce présentent un coeur dur (Tg élevée) et une écorce molle (Tg faible).

La taille finale des particules de la dispersion aqueuse de polymère nanocomposite de l'invention peut varier de 50 à 500 nm et de préférence de 70 à 150 nm, avec un extrait sec global ($SiO_2$ + polymère) de ladite dispersion pouvant varier de 10 à 65% en poids et de préférence de 35 à 50% en poids.

Le rapport en poids entre la silice et l'extrait sec global ($SiO_2/(SiO_2$ + polymère)) peut varier de 0,1 à 60% et de préférence de 3 à 40%.

L'extrait sec final du polymère peut varier de 35 à 70% en poids et de préférence de 40 à 60% en poids.

Suivant une variante préférée de l'invention, une dispersion aqueuse de polymère nanocomposite particulière peut s'obtenir en utilisant comme semence au départ de la 1ère étape de polymérisation, au moins une dispersion aqueuse de polymère différente. Plus particulièrement, cette dispersion aqueuse de polymère différente peut être choisie parmi les dispersions aqueuses de polymère nanocomposite telles que définies selon l'invention.

La semence de polymère de la 1ère étape peut contenir de 0 à 50% en poids de nanoparticules de silice.

La semence de polymère de la 1ère étape peut constituer de 0 à 40% en poids du polymère final.

Des dispersions aqueuses de nanosilice (ou nanoparticules de silice), convenables pour la présente invention, ne sont pas traitées par des agents de couplage type silane et les dispersions aqueuses qui en résultent ne comprennent aucun composé organique à caractère cationique parmi les monomères ou dispersants ou amorceurs, pouvant fonctionner comme stabilisant desdites dispersions de silice et lesdites dispersions sont stables en terme de gélification ou d'absence d'agrégats et/ou d'agglomérats et/ou de sédimentation pendant la réaction ou au cours du stockage ou de l'utilisation.

La taille des nanoparticules de silice dans la dispersion aqueuse de silice, selon l'invention, peut varier de 5 à 50 nm et, de préférence, de 5 à 30 nm. Cette taille est une moyenne qui fait référence à une méthode de mesure indirecte, par la méthode de la mesure de la surface spécifique (selon méthode BET), mais les mesures par méthode PCS (voir dans partie expérimentale) ou par microscopie électronique de transmission (MET), peuvent aussi confirmer une telle taille moyenne dans ces plages de taille.

Plus particulièrement, ladite dispersion aqueuse de nanoparticules de silice est à base de nanosilice modifiée par l'aluminium.

Les nanoparticules de silice modifiées aluminium ont un ratio en poids $SiO_2/Al_2O_3$ pouvant varier de 80/1 à environ 240/1, et de préférence de 120/1 à 220/1 et encore plus préférentiellement de 140/1 à 180/1.

La modification desdites nanoparticules de silice par l'aluminium correspond à une stabilisation de la dispersion de $SiO_2$ par de l'aluminate de sodium à la place de l'hydroxyde de sodium. La dispersion aqueuse de nanoparticules de silice modifiée par l'aluminium est préparée par modification de la surface de l'acide silicique par des ions aluminates, ce qui est possible sous certaines conditions, l'aluminium et la silice ayant un nombre de coordination de 4 ou 6 par rapport à l'oxygène, et l'aluminium et la silice ayant approximativement le même diamètre atomique. L'ion aluminate $Al(OH)_4^-$ est géométriquement identique à $Si(OH)_4$, l'ion pouvant être inséré ou substitué à la surface de $SiO_2$, et le silicate d'aluminium obtenu ayant une charge négative fixée. Une telle dispersion aqueuse de nanoparticules de silice modifiée par l'aluminium est plus stable vis-à-vis de la formation de gel qu'une dispersion aqueuse de nanoparticules de silice non modifiée qui peut geler rapidement et qui est moins sensible aux sels.

Les dispersions aqueuses de nanoparticules de silice, stables dans une gamme de pH allant de 2 à 10, peuvent être obtenues par d'autres procédés différents du procédé de modification par l'aluminium. Comme exemples de tels produits, on peut citer le Snowtex® O et le Snowtex ® N de Nissan Chemical et ces produits sont des silices avec les nanoparticules de silice portant une charge négative (nanoparticules de silice anioniques) ayant la majorité des sites acide (Si-OH) neutralisés, par exemple, par le sodium ou l'ammonium.

Les nanoparticules de silice peuvent être attachées par liaisons chimiques aux particules de polymère.

Les particules utilisées de nanosilice modifiées aluminium (en surface de la nanoparticule) peuvent être des nanoparticules de silice provenant de suspensions colloïdales, comme le Ludox® AM, Ludox® TMA, Ludox® SK, Ludox® SK-G de Grace Davison, ou comme le Bindzil® 305/220 FG de Eka Chemicals ou comme le Levasil 200A/30 de HC. Starck (Bayer) ou le Snowtex® C de Nissan Chemical.

Selon une variante de l'invention, le rapport en poids entre les nanoparticules de silice et l'extrait sec global (total silice + polymère sec) varie de 0,1 à 60% et de préférence de 3 à 40%. La présence de 3 à 5% en poids de nanoparticules de silice suffit pour observer une stabilisation des particules de polymère et une amélioration des performances mécaniques, telles que la dureté. Les performances mécaniques sont significativement meilleures pour un rapport en poids de nanoparticules de silice allant de 5 à 60%.

La dispersion aqueuse de polymère nanocomposite peut également contenir des agents tensioactifs.

Comme agents tensioactifs non-ioniques, on peut citer des polyéthers tels que des condensats d'oxyde d'éthylène et d'oxyde de propylène, des éthers et des thioéthers d'alkyle, des polyéthylènes d'alkylaryl glycol et des polypropylènes d'alkylaryl glycol, des dérivés d'oxyde d'éthylène d'acides gras à chaîne longue, des condensats d'oxyde d'éthylène avec des alkyl-mercaptans supérieurs, des dérivés d'oxyde d'éthylène d'alcools et d'acides carboxyliques à chaîne longue. Ces tensioactifs non-ioniques contiennent de préférence environ 10 à 100 motifs oxyéthylène par molécule, et encore plus préférentiellement environ 20 à 50 motifs oxyéthylène.

Comme agents tensioactifs anioniques, on peut citer des alcools gras en $C_8$-$C_{36}$, tels que ceux de stéaryle et de lauryle, de préférence alkoxylés et plus particulièrement éthoxylés avec 1 à 50 motifs oxyéthylène par molécule, des dérivés sulfonés d'alcool gras, des sulfates et/ou des sulfonates (sodium ou ammonium), des dérivés de l'acide sulfosuccinique (sels de sodium ou d'ammonium), des esters ou hémi-esters d'alcool gras pouvant être éthoxylés ou pas.

Les monomères mis en oeuvre selon la présente invention, ainsi que les proportions, seront choisis en fonction de la Tg visée, ainsi qu'en fonction des propriétés que l'on souhaite conférer au polymère, telles que l'hydrophobie.

La Tg d'un polymère peut être estimée par la loi de FOX :

$$1/Tg = wa/Tga + wb/Tgb + \ldots$$

wa et wb étant les fractions massiques des monomères a et b,

Tga et Tgb étant les Tg des homopolymères correspondants, et leurs valeurs étant tirées de la littérature, telle que le « Polymer Handbook », 3ème édition, 1989.

Dans le cas de particules structurées coeur/écorce, la composition de monomères de chacune des phases (coeur ou écorce) est choisie en fonction de la Tg souhaitée pour chacune de ces phases. De préférence, les particules structurées coeur/écorce présentent un coeur dur (Tg élevée) et une écorce molle (Tg faible).

Dans le cas d'une phase molle, la Tg de la phase correspondante peut, de manière générale, être inférieure ou égale à 20°C, et plus particulièrement se situer entre -40°C et 20°C et de préférence être inférieure ou égale à 0°C et plus particulièrement se situer entre -30°C et 0°C.

Dans le cas d'une phase molle, la composition de monomères correspondante comprend comme monomères préférés au moins un monomère choisi parmi l'acrylate d'éthyle, l'acrylate de butyle et l'acrylate de 2-éthylhexyle.

Dans le cas d'une phase dure, la Tg de la phase correspondante peut, de manière générale, être supérieure ou égale à 30°C et plus particulièrement se situer entre 30°C et 150°C et de préférence être supérieure ou égale à 50°C et plus particulièrement se situer entre 50°C et 130°C.

Dans le cas d'une phase dure, la composition de monomères correspondante comprend comme monomères préférés au moins un monomère choisi parmi le styrène et le méthacrylate de méthyle.

Les monomères pouvant être utilisés sont des monomères ayant au moins un groupement éthylénique insaturé, et plus particulièrement ceux pouvant polymériser avec des radicaux libres.

Comme esters (méth)acryliques préférés, on peut citer l'acrylate de méthyle, l'acrylate d'éthyle, l'acrylate de n-butyle, l'acrylate de tertiobutyle, l'acrylate de 2-éthylhexyle, le méthacrylate de méthyle, le méthacrylate de butyle, les acrylates de 2-hydroxyéthyle et de 2-hydroxypropyle.

Comme monomères vinylaromatiques préférés, on peut citer le styrène et ses dérivés incluant les vinyltoluènes.

Comme monomères polyinsaturés préférés, utilisés comme agents de réticulation interne, on peut citer les esters (méth)acryliques ayant au moins deux doubles liaisons éthyléniques insaturées non conjuguées comme des di(méth)acrylates d'alkylène glycol, tels que le di(méth)acrylate d'éthylène glycol, le di(méth)acrylate de 1,2-propylène glycol, le di(méth)acrylate de 1,3-propylène glycol, le di(méth)acrylate de 1,3-butylène glycol, le diacrylate de 1,4-butylène glycol, le di(méth)acrylate de 1,6-hexanediol. D'autres monomères polyinsaturés comme le (méth)acrylate d'allyle, le fumarate de diallyle, le cyanurate de triallyle, le divinylbenzène et le (méth)acrylate de vinyle, peuvent également être cités.

Comme monomères utilisables en tant que précurseurs de réticulation (auto-réticulation ou non) de post-polymérisation, on peut citer par exemple la diacétone acrylamide (DAAM), la diacétone méthacrylamide, la 2-butanone (méth)acrylamide, l'acétoacétate de vinyle et le (méth)acrylate d'acétoacétoxyéthyle, et comme monomères à groupement silanes (silanés) ceux parmi les vinyltrialkoxysilanes tels que le vinyl triméthoxysilane ou parmi les alkylvinyldialcoxysilanes, les acryloxyalkyltrialkoxysilanes ou les méthacryloxyalkyltrialcoxysillanes tels que les acryloxyethyltriméthoxysilane, méthacryloxyethyltriméthoxysilane, acryloxypropyltriméthoxysilane ou méthacryloxypropyltriméthoxysilane.

Plus particulièrement, la composition des monomères peut comprendre l'acétoacétoxy éthyl méthacrylate (AAEM) jusqu'à 50% en poids et de préférence de 0,1 à 25% par rapport au total des monomères. La présence de ce type de monomère améliore la tenue mécanique du film final, avec une augmentation significative du module mécanique et d'autres performances liées : entre autres dureté, résistance au blocking améliorées.

Comme acides mono- ou poly-carboxyliques $\alpha,\beta$-insaturés à chaîne courte, on peut citer l'acide acrylique, l'acide méthacrylique, l'acide itaconique, l'acide crotonique, l'acide maléique, l'acide fumarique et l'acide vinylbenzoïque.

Comme agents de transfert de chaîne, on peut citer les alkyl-mercaptans linéaires ou ramifiés et les acides mercapto-carboxyliques ayant de 2 à 8 atomes de carbone, ainsi que leurs esters tels que l'acide mercapto-acétique, les acides 2-mercapto- et 3-mercapto-propioniques, l'acide 2-mercapto-benzoïque, l'acide mercapto-succinique, l'acide mercapto-isophtalique et leurs esters d'alkyde.

Comme agents de transfert de chaîne préférés, on peut citer les esters d'un acide mercapto-monocarboxylique et/ou d'un acide mercapto-dicarboxylique ayant de 2 à 6 atomes de carbone, plus particulièrement les esters d'alkyde d'un acide mercapto-propionique, et plus préférentiellement les esters d'isooctyle ou de n-dodécyle de l'acide mercapto-propionique, ou le n-dodécylmercaptan.

Des amorceurs convenables selon l'invention peuvent contenir au moins un radical libre de polymérisation. La quantité d'amorceur contenant un radical libre de polymérisation peut varier de 0,1 à 3% en poids par rapport à la quantité totale de monomères à polymériser. Les amorceurs contenant un radical libre de polymérisation peuvent également être introduits avec un activateur comme charge initiale du milieu réactionnel, et la quantité restante peut être ajoutée en continu ou en discontinu pendant la polymérisation.

Comme amorceurs préférés, on peut citer des peroxydes non ioniques, tels que les peroxydes organiques comme les hydroperoxydes d'alkyles, tels que le tert-butyl-hydroperoxyde (TBHP), et les amorceurs azo comme le 2,2'-azobisisobutyronitrile ou le 2,2'-azobis-2-méthyl-N-(2-hydroxyéthyl) propionamide.

Des amorceurs convenables utilisés ont un temps de demi-vie qui n'est pas inférieur à 10 heures à 50°C et de préférence qui n'est pas inférieur à 10 heures à 85°C.

Comme activateurs préférés, on peut citer l'acide ascorbique, l'acide érythorbique, ou les dérivés de l'acide acétique sulfinique comme le formaldéhyde de sodium sulfoxylé (Rongalite® C de Solvadis, Hydrosulfite® AWC de Cognis), et ses compositions comme le Bruggolite® FF6 de Brüggemann Chemical.

Des oligomères et/ou monomères multifonctionnels (méth)acrylates (MFA) peuvent être mélangés à la dispersion de l'invention de façon à obtenir un latex photoréticulable. On peut citer comme oligomères (méth)acrylates multifonctionnels convenables les dérivés d'acrylates de polyglycol éthoxylés et propoxylés, les diacrylates de bisphénol, les diacrylates de néopentylglycol, les triacrylates de triméthylolpropane, les tétra- et penta-acrylates de pentaérytritol ou les monomères multifonctionnels tels que les di-, tri- et tétra-acrylates du polyéthylène ou polypropylène glycol ou les oligomères d'acrylates de polyester, ou d'époxy, ou d'uréthane. Plus particulièrement dans ce cas, le polymère de ladite dispersion comporte des groupements acétoacétoxy libres. Ceci permet d'avoir un film pré-réticulé, après filmification et avant réticulation sous rayonnement (UV ou faisceau d'électrons), par réaction d'addition du groupement acétoacétoxy sur le (méth)acrylate, de préférence acrylate multifonctionnel (MFA). Il en résulte une tenue chimique, mécanique et thermique supérieure du film final obtenu, mais aussi une amélioration de la résistance au blocking, avant de le soumettre à la réticulation sous rayonnement pour obtenir une réticulation supplémentaire. La double réticulation en post-polymérisation conduit à un film avec une tenue mécanique supérieure et une résistance chimique, une dureté, une résistance à l'abrasion, une tenue thermique améliorées et un taux réduit de monomères résiduels par consommation réactive avec les groupements acétoacétoxy.

Ladite dispersion peut être encore modifiée selon un mode plus particulier, par post-addition (après polymérisation en émulsion) d'au moins un composé organosilané. Comme exemples de composés organosilanés convenables on peut citer : octyl triéthoxysilane, octyl triméthoxysilane, éthyltriméthoxysilane, propyltriéthoxysilane, phényltriméthoxysilane, i-butyltriéthoxysilane, glycidoxypropyl triméthoxysilane, glycidoxypropyl méthyldiéthoxysilane uréidopropyltriméthoxysilane, cyclohexyltriméthoxysilane, cyclohexyltriéthoxysilane, diméthyldiméthoxysilane, chloropropyl triéthoxy silane, i-butyl triéthoxy silane, triméthyléthoxy silane, phényldiméthyléthoxy silane, hexaméthyldisiloxane, triméthyl silyl chlorure, hexaméthyldisilizane, méthyl triéthoxysilane, méthyl triméthoxysilane, hexyltriméthoxy silane, isocyanate silanes tels que tris-(3-(triméthoxysilyl)propyl) isocyanurate, γ-mercaptopropyl triméthoxysilane, 3-mercaptopropyl triéthoxysilane bis-(3-(triéthoxysilyl) propyl) polysulfure, silanes avec un group epoxy et/ou silanes avec un group glycidoxy et/ou glycidoxypropyl comme les γ-glycidoxypropyl triméthoxysilane et/ou γ-glycidoxypropyl méthyl diéthoxysilane, 3-glycidoxypropyl hexyltriméthoxysilane, β-(3,4-epoxycyclohexyl)-éthyl triméthoxysilane, silanes avec un group vinyl comme le vinyl triéthoxysilane, vinyl triméthoxysilane, vinyl tris-(2-méthoxyéthoxy) silane, vinyl méthyldiméthoxysilane, vinyltriisopropoxysilane, γ-méthacryloxypropyltriméthoxysilane, γ-méthacryloxypropyltriéthoxysilane, γ-méthacryloxypropyltriisopropoxysilane.

L'intérêt de ces composés est basé sur le fait que ces composés silanés permettent le greffage du composé silané sur la surface de la nanoparticule de silice par réaction de condensation et/ou par interaction (liaison H) avec les groupements Si-OH superficiels propres à la nanosilice (formations de liaisons covalentes avec la nanosilice ou de liaisons H avec la surface de la nanosilice). Ce greffage ou liaison H permet finalement de modifier partiellement cette surface de la nanoparticule et lui conférer un caractère plus hydrophobe.

En conséquence de cette modification très partielle, le revêtement final est significativement plus résistant à la perméabilité de l'eau (imperméabilité contrôlée). Cette performance particulière est très importante pour les applications de revêtements de protection pour bois ou de produits dérivés du bois. Le taux convenable desdits composés organosilanés fonctionnels pour une telle modification peut aller jusqu'à 10 mmol dudit composé par gramme de nanosilice (à l'état sec) et plus particulièrement de 0,01 à 2,5 mmol par g de nanosilice (état sec).

La température de polymérisation requise pour synthétiser les dispersions aqueuses selon l'invention, à la fois pour l'étape de polymérisation principale et pour l'étape de polymérisation supplémentaire, peut varier d'environ 40°C à environ 90°C, et de préférence d'environ 55°C à environ 85°C, en fonction de la durée de polymérisation prévue et du type d'amorceur ou d'activateur utilisé.

La durée de l'étape ou des étapes de polymérisation peut varier d'environ 30 minutes à environ 8 heures et de préférence d'environ 60 minutes à environ 4 heures.

Le deuxième objet de l'invention concerne un procédé spécifique de préparation de la dispersion aqueuse de polymère nanocomposite selon l'invention telle que définie ci-dessus. Cette dispersion peut s'obtenir par un procédé comprenant au moins les étapes suivantes :

 i) addition dans un réacteur de polymérisation d'au moins une dispersion de nanoparticules de silice présentant un caractère anionique et stable dans une plage de pH allant de 2 à 10, ladite nanosilice étant modifiée à l'aluminium,
ii) addition en continu ou en semi-continu d'une composition de monomères en au moins une étape,
iii) polymérisation du mélange réactionnel résultant des étapes i) et ii) en présence d'au moins un système d'amorceur organique libre de tout groupement ionique, ledit système d'amorceur pouvant être ajouté avec la composition de monomères ou séparément.

La dispersion aqueuse de nanoparticules de silice additionnée lors de l'étape i) peut être exempte de tout composé organique à caractère cationique choisi parmi les monomères ou dispersants ou amorceurs pouvant fonctionner comme stabilisant de ladite dispersion aqueuse de nanoparticules de silice.

De préférence, le mélange réactionnel de polymérisation résultant de l'étape iii) est stable, pendant et après la polymérisation en terme d'absence de gélification.

Chaque étape d'addition ii) et de polymérisation iii) peut comprendre au moins 2 étapes, la composition de monomères de la 1ère étape pouvant être différente de la composition de monomères de la 2ème étape.

Plus particulièrement, la composition de monomères additionnée lors de l'étape ii) est choisie pour obtenir des particules structurées de polymère nanocomposite et de préférence ayant une structure coeur/écorce.

Ledit procédé, selon une variante particulière de l'invention, peut comprendre une étape supplémentaire consistant en l'utilisation d'au moins une dispersion aqueuse de polymère comme semence, avant l'addition de ladite composition de monomères, ladite dispersion aqueuse de polymère utilisable comme semence pouvant être une dispersion aqueuse de polymère nanocomposite telle que définie selon la présente invention.

Selon une variante du procédé de préparation d'une dispersion selon l'invention, ledit procédé comprend une étape supplémentaire de post-addition (après l'étape de polymérisation en émulsion) d'au moins un composé organosilané fonctionnel tel que défini ci-haut selon la formule générale (I), à un taux allant jusqu'à 10, plus préférentiellement de 0,01 à 2,5 mmol par g de nanosilice (état sec).

Un autre objet de la présente invention est une composition de revêtement et plus particulièrement une composition de revêtement de protection pour des applications nécessitant des performances élevées d'anti-corrosion et/ou d'anti-abrasion et/ou de résistance chimique, comprenant au moins une dispersion telle que définie selon l'invention ou préparée selon le procédé tel que défini selon l'invention.

Plus particulièrement, une telle composition de revêtement est sélectionnée parmi les peintures ou vernis ou encres ou adhésifs.

Les compositions de revêtement selon l'invention peuvent comprendre des additifs connus de l'homme du métier. Comme exemples d'additifs, on peut citer les charges, les pigments, les colorants, les agents anti-mousses, les agents dégazants, les épaississants, les agents thixotropes, les agents de nivellement, les plastifiants, les absorbeurs UV.

Les substrats convenables pour ces revêtements sont le bois, les surfaces métalliques comme l'acier ou l'aluminium, les films plastiques comme le polyester, le PET, les polyoléfines, le polyamide, les polycarbonates, l'ABS ou le polystyrène, les textiles tissés ou non tissés, les briques, le papier et ses équivalents, la céramique, la pierre, les matériaux cimentaires, le bitume, les fibres, le verre, la porcelaine et le cuir. Une utilisation particulière est celle de revêtement de protection pour bois ou de revêtement décoratif sur verre. Dans le cas de l'application bois, il est préférable d'utiliser une dispersion modifiée par post-addition de produit organosilané fonctionnel tel que défini ci-haut, afin d'avoir une résistance significativement améliorée à la perméabilité à l'eau du revêtement final.

En dehors de l'utilisation directe comme composant (liant) dans les peintures ou vernis ou encres ou adhésifs, la dispersion aqueuse de polymère nanocomposite de l'invention peut aussi servir comme semence de polymère nanocomposite hydrodispersible pour la préparation de latex structurés spécifiques.

La dispersion aqueuse de polymère nanocomposite selon l'invention peut être séchée par congélation ou par « spray drying », de manière à obtenir une poudre de particules composites redispersibles. Pour cette application particulière, il est préférable que le polymère composite ait une Tg supérieure à 50°C, de préférence supérieure à 90°C et encore plus préférentiellement supérieure à 100°C. Les poudres de particules composites redispersibles peuvent être utilisées comme additifs dans les revêtements, plastiques, encres, etc. La température minimale de formation de film (TMFF ou MFT) est de préférence inférieure à 40°C et plus préférentiellement inférieure à 20°C. L'extrait sec de la dispersion (polymère + nanosilice) peut varier de 30 à 60% et de préférence de 40 à 55%. La viscosité finale à 23°C peut varier de 5 à 10000 et de préférence, dans une plage allant de 5 à 3000 mPa.s et reste stable au moins 1 mois après stockage à 50°C. Le terme « stable » est à interpréter comme signifiant une variation inférieure à 5% sur la viscosité initiale.

Les exemples suivants de la partie expérimentale, peuvent illustrer la présente invention, sans limiter sa portée.

**Partie expérimentale :**

Matières premières utilisées : tableaux 1a et 1b

Tableau 1a : Dispersions aqueuses de nanosilice

| Constituant | Fonction | Nature chimique | Fournisseur |
|---|---|---|---|
| Ludox® AM | Dispersion de nanoparticules de silice anionique | 30% en poids d'extrait sec, stable au pH de 2 à 10. Taux $SiO_2$ = 29-31% Taux $Al_2O_3$ = 0,197% (voir méthode analyse ci-dessous) Taille : 12 nm (méthode par surface spécifique = 228 $m^2$/g, selon BET et masse volumique dispersion à 20°C, $\rho$=1,2 $g/cm^3$, *Selon fiche fournisseur* | Grace Davison |
| Bindzil® 305/220 FG | Dispersion de nanoparticules de silice anionique | 30% (ES), stable au pH de 2 à 10, avec taux $SiO_2$ = 29,5-31% $Al_2O_3$ : 0,244% (voir méthode analyse ci-dessous) Taille: 15 nm (méthode par surface spécifique = 220 $m^2$/g, selon BET et masse volumique dispersion à 20°C, $\rho$=1,2 $g/cm^3$), *Selon fiche fournisseur* | Eka Chemicals AB (Akzo Nobel) |
| Levasil® 200A/30 | Dispersion de nanoparticules de silice anionique | 30% ES, stable au pH de 2 à 10 Taux SiO2 : 30% Taille : 15 nm (méthode surface spécifique : 200 $m^2$/g selon BET et masse volumique dispersion à 20°C, $\rho$=1,2 $g/cm^3$), Selon fiche fournisseur $Al_2O_3$=0,160% (voir méthode analyse ci-dessous) | H.C. Starck (BAYER) |
| Klebosol® 30 R12 | Dispersion de nanoparticules de silice anionique | ES : 30% pas stable à pH : 2-10 %SiO2 : 30% $Al_2O_3$ : 0% (voir méthode analyse ci-dessous) Taille : 12 nm (méthode surface spécifique= 200 $m^2$/g, selon BET et masse volumique dispersion à 20°C, $\rho$=1,2 $g/cm^3$) Selon fiche technique fournisseur | Clariant |

Tableau 1b : monomères et autres matières premières

| Constituant | Fonction | Nature chimique | Fournisseur |
|---|---|---|---|
| Acide méthacrylique (AMA) | Monomère | Acide méthacrylique | Arkema |
| Acrylate de butyle (ABu) | Monomère | Acrylate de butyle | Arkema |
| Méthacrylate de méthyle (MMA) | Monomère | Méthacrylate de méthyle | Arkema |
| Méthacrylate d'acétoacétoxyéthyle (AAEM) | Monomère | Méthacrylate d'acétoacétoxyéthyle | Arkema |
| Disponil® FES 993 | Tensioactif | Lauryle sulfate de sodium éthoxylé 12 EO (oxyéthylène) à 30% ES | Cognis |
| TBHP 70 | Amorceur | Tertbutylhydroperoxyde à 70% en poids dans l'eau | Arkema |
| Persulfate de sodium | Amorceur | Persulfate de sodium | Imcequi SA |
| VA-086 | Amorceur | 2,2'-azobis-2-méthyl-N-(2-hydroxyéthyl)propionamide | Wako |
| Rongalite® C | Activateur | Formaldéhyde de sodium sulfoxylé | Solvadis |

(suite)

| Constituant | Fonction | Nature chimique | Fournisseur |
|---|---|---|---|
| Acticide® MBS | Conservateur | 2,5% en poids de MIT (2-méthyl-4-isotiazolin-3-one) 2,5% en poids de BIT (1,2-benzylisotiazolin-3-one) | Thor Chemie |
| Byk® 025 | Agent anti-mousse | Anti-mousse de silicone | Byk Chemie |
| Hydroxyde d'ammonium à 25% | Agent de neutralisation | Solution à 25% dans l'eau d'hydroxyde d'ammonium | Barcelonesa de Drogas y Productos Quimicos |

Méthodes de tests :

1) Taux de modification en Al de la nanosilice

Ce taux correspond au taux de $Al_2O_3$ dans la nanosilice, tel que confirmé par analyse spécifique quantitative d'Al par spectrométrie d'émission selon méthode décrite ci-dessous et conversion de Al en équivalent poids de $Al_2O_3$.

*Méthode utilisée d'analyse Al*

L'aluminium a été dosé par spectrométrie d'émission atomique (ICP-AES OPTIMA 3000DV de Perkin Liner) après une fusion alcaline.

| | Al (ppm) | $Al_2O_3$ (ppm) | % $Al_2O_3$ |
|---|---|---|---|
| **LUDOX AM** | 1040 | 1965 | 0,197 |
| **LEVASIL 200 A/30** | 845 | 1596 | 0,160 |
| **BINDZIL 305/220 FG** | 1290 | 2437 | 0,244 |
| **KLEBOSOL 30 R12** | 0 | 0 | 0 |

1) Viscosité

Evaluation de la viscosité avant et après vieillissement (1 mois à 50°C) selon la Norme ISO 2555, avec un viscosimètre Brookfield RVT.

2) Extrait sec

Evaluation de l'extrait sec à 105°C selon la Norme ISO 3251.

3) Mesure de la Température Minimale de Formation de Film (TMFF)

Evaluation de la TMFF selon la Norme ISO 2115, sur un appareil Rhopoint MFFT Bar 90.

4) Aspect du film de 100 μm d'épaisseur sur verre

Application d'un film de 100 μm d'épaisseur nominale et de 20 mm de largeur, grâce à un applicateur type « doctor blade », sur une plaque de verre propre. On remplit l'applicateur avec la dispersion aqueuse de polymère nanocomposite de l'invention et on le laisse glisser sur la plaque en verre jusqu'à obtention d'un film continu. On laisse sécher le film à température ambiante. On observe ensuite l'aspect du film : transparence, brillance, uniformité, présence de craquelures, etc.

5) <u>Taille de particules</u>

Les tailles moyennes des particules de nanosilice en dispersion, sauf indication contraire, sont déterminées selon la méthode de la mesure de la surface spécifique par la méthode BET, selon les indications des fiches techniques des fournisseurs.

Principe : surface spécifique = $(4\pi r^2)/(1,33\pi r^3)*\rho$, avec r étant le rayon de la particule et p la masse volumique de la dispersion aqueuse et p' la masse volumique desdites particules à l'état sec. Cela conduit à la relation suivante : r (m) = 3*(surface spécifique en $m^2/g$) / $\rho'$(en $g/m^3$), avec entre $\rho'$ et $\rho$ la relation suivante : $\rho' = 100*\rho/ ES$.

Les mesures selon méthode PCS ou par microscopie électronique à transmission (MET) confirment ces tailles.

*Mesure par Spectroscopie de Corrélation de Photons (PCS) :*

Cette méthode permet de mesurer le diamètre des particules de polymère + nanosilice (taille de l'un et de l'autre accessibles) et du polymère nanocomposite final. En fait, cette méthode permet la détection des particules de polymère nanocomposite final et de nanoparticules de silice libres, avec comme résultat mesuré la taille moyenne de l'ensemble (particules polymère nanocomposite et nanoparticules de silice de tailles significativement différentes). La présence de nanoparticules de silice libre implique une moyenne PCS nettement inférieure à celle mesurée par la méthode LS (diffusion Laser) décrite ci-dessous et la comparaison des résultats de deux méthodes permet ainsi de détecter la présence ou absence de nanoparticules de silice libre dans la dispersion finalement obtenue.

La taille des particules est mesurée à l'aide d'un appareillage Zetasizer 1000HSA - Malvern Instrument Ltd. L'échantillon est dilué (3 à 5 gouttes d'émulsion dans 50 ml d'eau) dans une cuve en polystyrène à l'aide d'eau déionisée sur un filtre en acétate de cellulose de 0,22 $\mu$m. La taille des particules est mesurée à une température de 25°C, sous un angle de mesure de 90° et à une longueur d'onde du laser de 633 nm.

*Mesure par granulométrie laser LS-230 :*

Cette méthode permet de mesurer le diamètre (taille) moyen des particules de polymère nanocomposite (polymère avec silice autour) seul. La taille des particules est mesurée à l'aide d'un granulomètre laser LS-230 Beckman Coulter couplé à un logiciel LS32. L'émulsion est pré-dispersée sous agitation magnétique dans un bécher de 100 ml (1 à 2 ml d'émulsion pour 100 ml d'eau déionisée).

Le modèle optique choisi pour effectuer l'analyse granulométrique est :

n = 1,5 - 0,01 i, avec n = indice optique, i = partie imaginaire de l'indice optique (i = 1,5).

L'indice de polydispersité caractérisant la largeur de la distribution est de 0,39 pour un standard monodisperse de 150 nm.

La taille moyenne des particules est exprimée en diamètre arithmétique moyen pondéré en volume.

6) <u>Stabilité thermique TG (ThermoGravimétrie)</u>

La température de dégradation thermique est mesurée par analyse thermo-gravimétrique (ATG) à l'aide d'un appareil TG7 de Perkin Elmer, sur des films séchés à une température de 23°C et à 50% d'humidité relative pendant 8 jours.

L'ATG est réalisée sous atmosphère inerte d'azote et avec montée de température de 23°C à 850°C, à une vitesse de 10°C/min.

7) <u>Résistance chimique</u>

Evaluation de la résistance chimique à l'eau et à l'éthanol (48% en eau) à 1 heure et à 16 heures : selon la norme EN 12720 (spot test).

Application de 2 couches de 150 $\mu$m d'épaisseur nominale avec un bar-coater sur du bois (placage hêtre), puis séchage intermédiaire de 16 heures à 20°C et 60% d'humidité relative (HR) et enfin ponçage.

Après 24 heures de séchage de la 2ème couche à 20°C / 60% HR : évaluation de la résistance chimique sur une échelle de 1 à 5, plus la valeur étant élevée, meilleure étant la résistance chimique.

8) <u>Dureté</u>

Evaluation de la dureté pendulaire des films appliqués sur verre avec un applicateur type « doctor blade » de 100 µm d'épaisseur nominale, selon la méthode de Persoz (norme NF EN ISO 1522), après 24 heures de séchage à 20°C et 60% HR.

9) Performances mécaniques

*Résistance à la traction :*

Les essais ont été réalisés sur une machine à traction MTS 1MH, à une température de 23°C et à 50% HR et avec une cellule de 50 N, la vitesse étant de 5 mm/min.

*Test DMTA (Dunamic Mechanical Thermal Analysis) :*

Les essais mécaniques sont réalisés sur un appareil Rheometrics RSAII, en traction avec balayage de -50°C à 200°C à 3°C/min et une fréquence de mesure de 1 Hz.

Des films sont obtenus par application des émulsions sur des plaques de polypropylène (épaisseur finale du film: environ 100 µm), puis séchage de 7 jours à 23°C et 50% HR. Deux gouttes d'un agent mouillant (Zonyl FSJ) sont ajoutées à 20 g d'émulsion et, pour éviter tout démouillage, la surface des plaques de polypropylène est légèrement poncée avant l'application.

Exemples 1 à 6 et 8 (selon l'invention) :

On prépare un polymère en dispersion aqueuse en une seule étape par un procédé de polymérisation en émulsion avec addition graduelle d'un amorceur redox. Toutes les parties citées sont en poids.

Dans un réacteur, on introduit 35 parties d'eau déionisée, 2,30 parties de lauryle sulfate de sodium éthoxylé Disponil® FES 993 et une dispersion aqueuse de nanoparticules de silice anionique, stable dans une gamme de pH allant de 2 à 10 (voir tableaux 1a et 2) et le réacteur est chauffé à 70°C ± 1°C.

Une émulsion de monomères est préparée en mélangeant : 1 partie d'acide méthacrylique, 51 parties d'acrylate de butyle et 48 parties de méthacrylate de méthyle dans une solution de 3,33 parties de lauryle sulfate de sodium éthoxylé Disponil® FES 993 et 26 parties d'eau déionisée.

Quand la température du réacteur atteint 70°C ± 1°C, une solution de 0,07 partie d'amorceur TBHP 70 dans 0,82 partie d'eau et une solution de 0,03 partie d'activateur Rongalite® C dans 0,82 partie d'eau est ajoutée, puis après 5 minutes, l'addition de l'émulsion de monomères et d'une solution de 0,64 partie d'amorceur TBHP 70 dans 9,40 parties d'eau et d'une solution de 0,27 partie d'activateur Rongalite® C dans 9,40 parties d'eau commence. L'émulsion de monomères est ajoutée en 3 heures et la solution d'amorceur TBHP 70 et la solution d'activateur Rongalite® C en 3,5 heures, tout en maintenant la température à 70°C ± 1°C.

A la fin de l'addition, le réacteur est maintenu à 70°C ± 1°C pendant 1 heure supplémentaire, avant d'être refroidi à 35°C. Une solution d'hydroxyde d'ammonium à 25% est ajoutée pour atteindre un pH = 7,5-8, puis 0,47 partie d'un conservateur Acticide® MBS et 0,01 partie d'un agent anti-mousse Byk® 025.

Le réacteur est ensuite refroidi à l'ambiante et le mélange filtré.

Exemple 7 (selon l'invention) :

On opère exactement comme dans les exemples 1 à 6, sauf en ce qui concerne l'addition de l'amorceur selon les conditions suivantes.

Quand la température du réacteur atteint 70°C ± 1°C, une solution de 0,1 partie d'amorceur VA-086 dans 0,82 partie d'eau et une solution de 0,06 partie d'activateur Rongalite® C dans 0,82 partie d'eau est ajoutée, puis après 5 minutes, l'addition de l'émulsion de monomères et d'une solution de 0,9 partie d'amorceur VA-086 dans 9,40 parties d'eau et une solution de 0,54 partie d'activateur Rongalite® C dans 9,40 parties d'eau commence. L'émulsion de monomères est ajoutée en 3 heures et la solution d'amorceur VA-086 et la solution d'activateur Rongahte® C sont ajoutées en 3,5 heures, tout en maintenant la température à 70°C ± 1°C. Les autres conditions de fin de préparation sont identiques à celles décrites ci-haut pour les exemples 1 à 6.

Résultats :

Ils sont présentés au tableau 2 ci-dessous.

Tableau 2

| | Ex. 1 | Ex. 2 | Ex. 3 | Ex. 4 | Ex. 5 | Ex. 6 | Ex. 7 | Ex 8 |
|---|---|---|---|---|---|---|---|---|
| SiO$_2$ % poids vs (polym+SiO2) | 5,5 | 10,3 | 15 | 15 | 24 | 30 | 15 | 15 |
| Dispersion silice anionique | Ludox® AM | Ludoxe® AM | Ludox® AM | Bindzil® 305/22 0 FG | Ludox® AM | Ludox® AM | Ludox® AM | Levasil® 200A/3 0 |
| Amorceur | TBHP 70 | TBHP 70 | TBHP 70 | TBHP 70 | TBHP 70 | TBHP 70 | VA-086 | TBHP 70 |
| Viscosité (mPa.s) | 19 | 12 | 11 | 16 | 9 | 9 | 8 | 14 |
| Viscosité (mPa.s) 1 mois à 50°C | 20 | 12 | 11 | 16 | 9 | 10 | 10 | 14 |
| Extrait sec (%) | 42,3 | 42,9 | 41,6 | 43 | 42,9 | 43,5 | 40,1 | 42,9 |
| TMFF (°C) | 4 | 4 | 3 | 5 | 2 | <0 | 6 | 5 |
| Taille part./PCS (nm) | 111 | 120 | 110 | 116 | 108 | 110 | 154 | 107 |
| Taille p./LS-230 (nm) | 102 | 110 | 101 | 103 | 97 | 97 | 141 | 93 |
| Dureté Persoz (s) | 83 | 85 | 109 | 110 | 145 | 196 | 105 | 107 |
| Résist. chimique (16 h /eau) | 5 | 5 | 5 | 5 | 5 | 5 | 5 | 5 |
| Résist. chimique (1 h /éthanol 48%) | 3 | 3 | 5 | 5 | 5 | 5 | 5 | 5 |
| Résist. chimique (16 h/éthanol 48%) | 1 | 2 | 3 | 3 | 3-4 | 4 | 3 | 3 |
| Aspect film 100 µm sur verre | Clair brillant | Clair, brillant | Clair, brillant | Clair, brillant | Clair, brillant | Clair, brillant | Clair, brillant | Clair, brillant |

On peut conclure que :

- Les dispersions hybrides des exemples 1 à 8 sont stables à long terme sans augmentation de la viscosité après 1 mois à 50°C.
- La mesure de la taille des particules des dispersions des exemples 1 à 8, réalisée grâce à PCS et LS (techniques différentes sélectives) indique qu'elles ne contiennent pas de nanoparticules de silice libres (valeurs très proches entre PCS et LS ).
- Les dispersions hybrides selon l'invention conduisent à des films clairs et brillants, ce qui traduit l'absence d'agglomérats de silice (stabilité mise en évidence).

Contre-exemple 1 (comparatif) :

Le même mode opératoire que pour les exemples 1 à 6 est répété, mais sans addition de la dispersion de nanoparticules de silice anionique (0% de silice).

Contre-exemple 2 (comparatif) : avec 15% de silice Ludox® AM

On prépare un polymère conventionnel en une seule étape par un procédé de polymérisation en émulsion avec addition graduelle d'un amorceur inorganique. Toutes les parties citées sont en poids. Dans un réacteur, on introduit 47 parties d'eau déionisée, 2,35 parties de lauryle sulfate de sodium éthoxylé Disponil® FES 993 et 61 parties d'une dispersion aqueuse de nanoparticules de silice anionique Ludox® AM, stable dans une gamme de pH allant de 2 à 10 et le réacteur est chauffé à 80°C $\pm$ 1°C.

Une émulsion de monomères est préparée en mélangeant 1 partie d'acide méthacrylique. 51 parties d'acrylate de butyle et 48 parties de méthacrylate de méthyle dans une solution de 10 parties de lauryle sulfate de sodium éthoxylé Disponil® FES 993 et 37 parties d'eau déionisée.

Quand la température du réacteur atteint 80°C ± 1°C, 0,05 partie de persulfate de sodium comme amorceur et de 0,82 partie en poids d'eau est ajoutée sous forme de solution, puis après 5 minutes, on commence l'addition de l'émulsion de monomères et de 0,45 partie d'amorceur de persulfate de sodium et de 10,6 parties d'eau, sous forme de solution. L'addition de l'émulsion de monomères est réalisée en 3 heures et celle de la solution d'amorceur de persulfate de sodium en 3,5 heures, tout en maintenant la température à 80°C ± 1°C.

L'addition terminée, le réacteur est maintenu à 80°C ± 1°C pendant 1 heure supplémentaire, avant d'être refroidi à 35°C. Une solution d'hydroxyde d'ammonium à 25% est ajoutée pour atteindre un pH = 7,5-8, puis 0,47 partie d'un activateur Acticide® MBS et 0,01 partie d'un agent anti-mousse Byk® 025.

Le réacteur est ensuite refroidi à température ambiante et le mélange filtré.

Contre-exemple 3 (comparatif) : 15% de silice Klebosol® 30 R 12 (sans Al, et instable dans la plage de pH allant de 2 à 10)

Le même mode opératoire que pour les exemples 1 à 6 est répété, mais en remplaçant la dispersion Ludox® AM, par une dispersion aqueuse de nanoparticules de silice Klebosol® 30 R 12, qui ne remplit pas le critère de stabilité dans la plage de pH allant de 2 à 10 (aluminium Al=0, absence de modification par Al, voir tableau Ia).

La dispersion obtenue est instable et s'agglomère lors du refroidissement.

Résultats :

Ils sont présentés au tableau 3 ci-dessous.

Tableau 3

|  | Contre-ex. 1 | Contre-ex. 2 | Contre-ex. 3 |
|---|---|---|---|
| % $SiO_2$/solide total | 0 | 15 | 15 |
| Viscosité initiale (mPa.s) | 55 | 46 | - (gel) |
| Viscosité (mPa.s) après 1 mois à 50°C | 157 | > 120 000 | - (gel) |
| Extrait sec (%) | 42,8 | 42,8 | - |
| TMFF (°C) | 2 | 2 | - |
| Taille des particules PCS (nm) | 84 | 62 | - |
| Taille des particules LS-230 (nm) | 87 | 112 | - |
| Dureté Persoz (s) | 42 |  |  |
| Résistance chimique (16 heures dans l'eau) | 5 |  |  |
| Résistance chimique (1 heure dans l'éthanol à 48%) | 3 |  |  |
| Résistance chimique (16 heures dans l'éthanol à 48%) | 1 |  |  |

On peut conclure que :

- Selon l'interprétation de la mesure de la taille des particules de la dispersion du contre-exemple 2, réalisée grâce à deux techniques différentes sélectives (PCS et LS), les nanoparticules de silice sont libres et ne forment pas de particules nanocomposites avec le polymère organique.
- La viscosité augmente considérablement à température ambiante, mettant ainsi en évidence l'instabilité de la dispersion.

Evaluation des performances mécaniques (tableau 4 ci-dessous) :

Tableau 4

| | SiO$_2$/ (pol+silice) % | Amorceur | Test DMTA | | | Résistance à la traction | | |
|---|---|---|---|---|---|---|---|---|
| | | | T$_\alpha$ (°C) | Tan δ | Module E' 100°C (MPa) | Allongement rupture (%) | Contrainte rupture (MPa) | Module Young (MPa) |
| Ex. 1 | 5,5 | TBHP 70 | 34 | 1,95 | Ecoulement | 635 | 3,2 | 12 |
| Ex. 2 | 10,3 | TBHP 70 | 33 | 1,22 | 2,6 | 577 | 4,0 | 14 |
| Ex. 3 | 15 | TBHP 70 | 28 | 0,87 | 4,0 | 617 | 3,6 | 16 |
| Ex. 4 | 15 | TBHP 70 | 34 | 1,01 | 6,5 | 405 | 6,8 | 73 |
| Ex. 5 | 24 | TBHP 70 | 25 | 0,42 | 170 | 446 | 5,6 | 141 |
| Ex. 6 | 30 | TBHP 70 | 26 | 0,27 | 380 | 317 | 7,7 | 351 |
| Ex. 7 | 15 | VA-086 | 34 | 0,89 | 10,0 | 311 | 5,8 | 77 |
| Ex. 8 | 15 | TBHP 70 | 31 | 1,11 | 2,8 | 519 | 3,8 | 34 |
| Contre-ex. 1 | 0 | TBHP 70 | 34 | 2,71 | Ecoulement | 712 | 2,9 | 7 |

Exemples 9 à 11 (selon l'invention) :

Ces exemples illustrent l'effet de la présence de méthacrylate d'acétoacétoxyéthyle (AAEM) dans la composition des monomères.

Le mode opératoire reste le même que pour les exemples 1 à 6, mais en modifiant la composition du mélange de monomères selon le tableau 5 ci-dessous et avec un taux de SiO$_2$/extrait sec global (polymère+ silice) égal à 9%.

Tableau 5

| Monomères | Ex. 9 | Ex. 10 | Ex. 11 |
|---|---|---|---|
| Méthacrylate d'acétoacétoxyéthyle (AAEM) | 0 | 5 | 10 |
| Acrylate de butyle (ABu) | 51 | 49 | 46 |
| Méthacrylate de méthyle (MMA) | 48 | 45 | 43 |
| Acide méthacrylique (AMA) | 1 | 1 | 1 |

Résultats : voir tableau 6 ci-dessous.

Tableau 6

| | Ex. 9 | Ex. 10 | Ex. 11 |
|---|---|---|---|
| % SiO$_2$/extrait sec global | 9 | 9 | 9 |
| % méthacrylate d'acétoacétoxyéthyle (AAEM) | 0 | 5 | 10 |
| Type de dispersion anionique de nanoparticules de silice | Ludox® AM | Ludox® AM | Ludox® AM |
| Type d'amorceur | TBHP 70 | TBHP 70 | TBHP 70 |
| Viscosité (mPa.s) | 20 | 17 | 17 |
| Viscosité (mPa.s) après 1 mois à 50°C | 20 | 17 | 17 |
| Extrait sec (%) | 43,4 | 43,2 | 42,8 |
| TMFF (°C) | 5 | 5 | 7 |

(suite)

|  | Ex. 9 | Ex. 10 | Ex. 11 |
|---|---|---|---|
| Taille des particules PCS (nm) | 96 | 105 | 106 |
| Taille des particules LS-230 (nm) | 97 | 106 | 107 |
| Aspect d'un film de 100 µm sur verre | Clair, brillant | Clair, brillant | Clair, brillant |

Evaluation des performances mécaniques : voir tableau 7 ci-dessous

Tableau 7

|  | SiO$_2$ %poids (polym+silice) | % AAEM | Test DMTA | | | Résistance à la traction | | |
|---|---|---|---|---|---|---|---|---|
|  |  |  | T$_\alpha$ (°C) | Tan δ | Module E' 100°C (MPa) | Allongement rupture (%) | Contrainte rupture (MPa) | Module Young E (MPa) |
| Ex. 9 | 9 | 0 | 32 | 1,7 | 0,48 | 596 | 4,0 | 23 |
| Ex. 10 | 9 | 5 | 35 | 1,5 | 1,20 | 435 | 4,9 | 34 |
| Ex. 11 | 9 | 10 | 38 | 1,5 | 1,30 | 401 | 5,3 | 50 |

Figures :

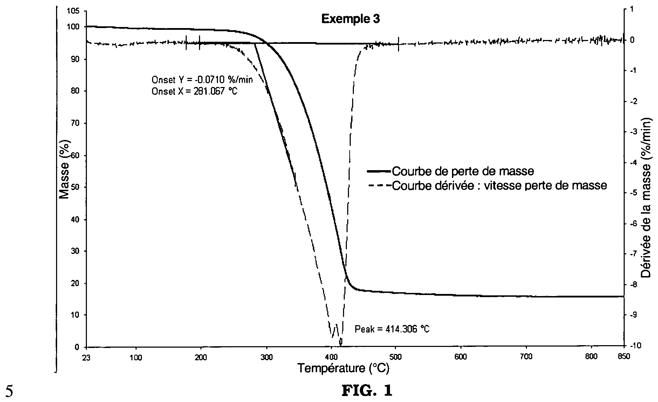

La figure 1 correspond à l'évaluation de la stabilité thermique ATG (Analyse Thermogravimétrique) de la dispersion aqueuse de polymère décrite dans l'exemple 3.

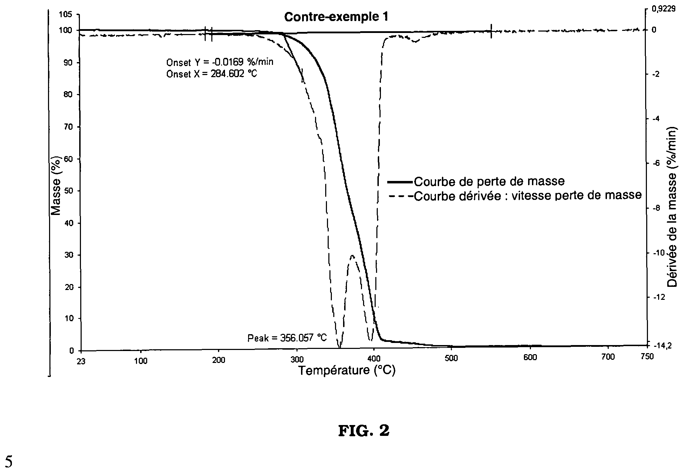

La figure 2 correspond à l'évaluation de la stabilité thermique ATG de la dispersion aqueuse de polymère décrite dans le contre-exemple 1.

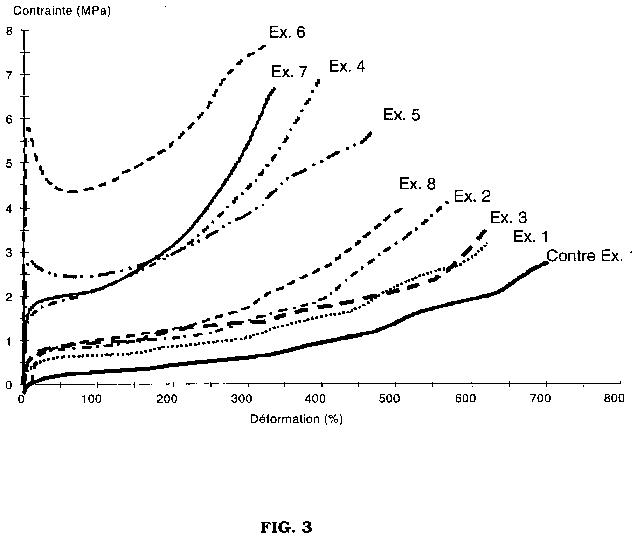

La figure 3 représente la variation de la contrainte en fonction de la déformation (courbe de traction) de films résultant de dispersions aqueuses de polymère décrites dans les exemples 1 à 8 et dans le contre-exemple 1.

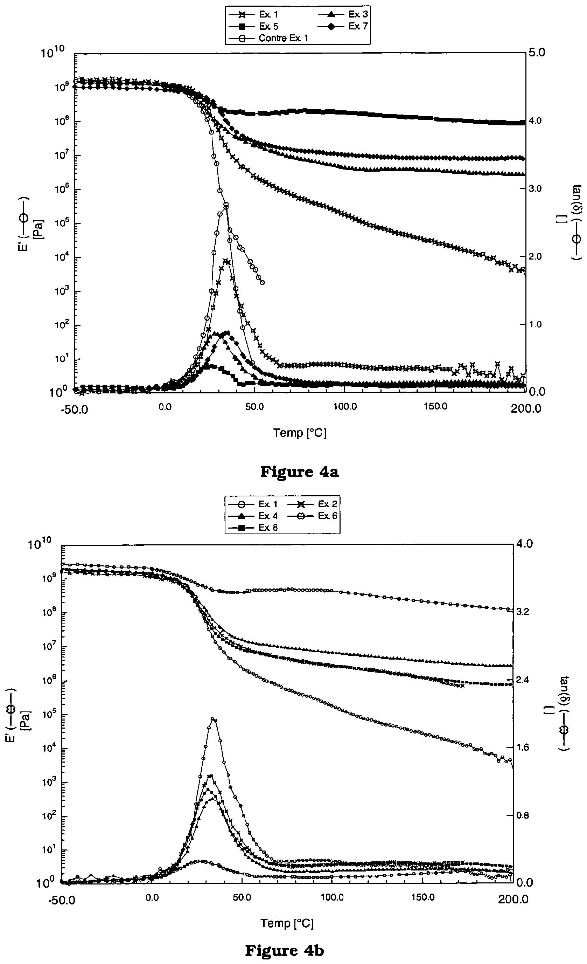

Les figures 4a et 4b représentent la variation du module élastique E' et de la tan δ en fonction de la température (courbes DMTA) de films résultant de dispersions aqueuses de polymère décrites dans les exemples 1 à 8 et dans le contre-exemple 1.

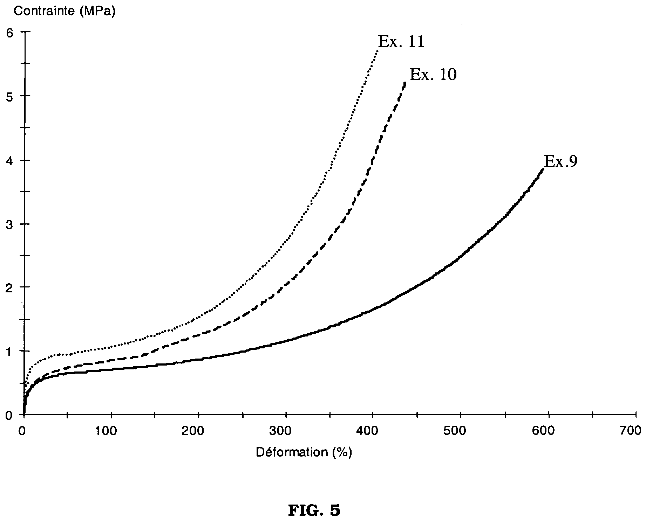

La figure 5 représente la variation de la contrainte en fonction de la déformation (courbe de traction) de films résultant de dispersions aqueuses de polymère décrites dans les exemples 9 à 11.

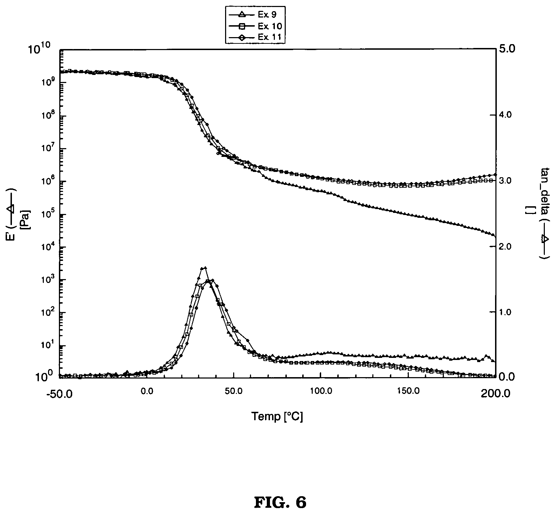

La figure 6 représente la variation du module élastique E' et de la tan δ fonction de la température (courbes DMTA) des dispersions aqueuses de polymère décrites dans les exemples 9 à 11.

**Revendications**

1. Dispersion aqueuse de polymère nanocomposite obtenue par polymérisation en émulsion d'au moins une composition de monomères en présence d'au moins une dispersion aqueuse de nanoparticules de silice, **caractérisée en ce que** :

   - ladite composition de monomères est ajoutée en au moins une étape dans le réacteur, contenant déjà la dispersion aqueuse de nanoparticules de silice exempte de tout composé organique cationique parmi les monomères ou dispersants ou amorceurs pouvant fonctionner comme stabilisants desdites nanoparticules de silice,
   - ladite dispersion aqueuse de nanoparticules de silice initiale :

- est à base de nanoparticules anioniques de silice modifiée à l'aluminium et exempte de tout agent de couplage

- est stable dans une plage de pH allant de 2 à 10, stabilité exprimée en termes d'absence d'agrégats et/ou d'agglomérats et/ou de sédimentation

- ladite polymérisation en émulsion est réalisée en présence d'au moins un système d'amorceur organique, libre de tout groupement ionique et en l'absence de tout monomère ou amorceur ou dispersants cationique.

**2.** Dispersion selon la revendication 1 **caractérisée en ce que** le taux en poids de modification de la nanosilice par l'aluminium correspond à SiO2/Al2O3 allant de 80/1 à 240/1.

**3.** Dispersion selon l'une des revendications 1 ou 2, **caractérisée en ce que** les particules de polymère nanocomposite ont une structure coeur/écorce.

**4.** Dispersion selon l'une des revendications 1 à 3, **caractérisée en ce que** la taille desdites nanoparticules de silice varie de 5 à 50 nm (selon méthode BET) .

**5.** Dispersion selon l'une des revendications 1 à 4, **caractérisée en ce que** la taille finale des particules de ladite dispersion varie de 50 à 500 nm.

**6.** Dispersion selon l'une des revendications 1 à 5, **caractérisée en ce que** l'extrait sec global de ladite dispersion varie de 10 à 65% en poids (selon la Norme ISO 3251, à 150°C) .

**7.** Dispersion selon l'une des revendications 1 à 6, **caractérisée en ce que** le rapport en poids entre la silice et l'extrait sec global varie de 0,1 à 60%.

**8.** Dispersion selon l'une des revendications 1 à 7, **caractérisée en ce que** ladite composition de monomères comprend jusqu'à 50% en poids d'acétoacétoxy éthyl méthacrylate.

**9.** Dispersion selon l'une des revendications 1 à 8, **caractérisée en ce qu'**elle a été modifiée par post-addition d'au moins un composé organosilané jusqu'à 10 mmol par g de nanosilice.

**10.** Procédé de préparation d'une dispersion selon l'une des revendications 1 à 9, **caractérisé en ce que** ledit procédé comprend au moins les étapes suivantes :

i) addition dans un réacteur de polymérisation d'au moins une dispersion de nanoparticules de silice anionique modifiée à l'aluminium et stable dans une plage de pH allant de 2 à 10,
ii) addition en continu ou semi-continu d'une composition de monomères en au moins une étape,
iii) polymérisation du mélange réactionnel résultant des étapes i) et ii), en présence d'au moins un système d'amorceur organique, libre de tout groupement ionique.

**11.** Procédé selon la revendication 10, **caractérisé en ce que** le système d'amorceur est ajouté, soit avec la composition de monomères, soit séparément.

**12.** Procédé selon l'une des revendications 10 ou 11, **caractérisé en ce que** la polymérisation comprend au moins 2 étapes.

**13.** Procédé selon l'une des revendications 10 à 12, **caractérisé en ce qu'**il comprend une étape d'utilisation d'au moins une dispersion aqueuse de polymère comme semence, avant l'addition de ladite composition de monomères.

**14.** Procédé selon l'une des revendications 10 à 13, **caractérisé en ce qu'**il comprend une étape supplémentaire de post-addition, après polymérisation en émulsion, jusqu'à 10 mmol par g de nanosilice, d'au moins un composé organosilané.

**15.** Composition de revêtement **caractérisée en ce qu'**elle comprend au moins une dispersion telle que définie selon l'une des revendications 1 à 9 ou obtenue selon un procédé tel que défini selon l'une des revendications 10 à 14.

**16.** Composition de revêtement selon la revendication 15, **caractérisée en ce qu'**elle est une composition de revêtement de protection.

17. Composition de revêtement selon l'une des revendications 15 ou 16, **caractérisée en ce qu'**elle est sélectionnée parmi les peintures ou vernis ou encres ou adhésifs.

18. Utilisation de la dispersion telle que définie selon l'une des revendications 1 à 9 ou obtenue selon un procédé tel que défini selon l'une des revendications 10 à 14 dans des compositions de revêtement ou comme semence de polymère nanocomposite hydrodispersible pour la préparation de latex structurés spécifiques.

19. Utilisation selon la revendication 18, **caractérisée en ce qu'**il s'agit d'une utilisation de revêtement de protection pour bois ou de revêtement décoratif sur verre.


**Patentansprüche**

1. Wässrige Nanokompositpolymer-Dispersion, erhalten durch Emulsionspolymerisation mindestens einer Monomerenzusammensetzung in Gegenwart mindestens einer wässrigen Siliciumdioxidnanopartikel-Dispersion, **dadurch gekennzeichnet, dass**:

 - die Monomerenzusammensetzung in mindestens einem Schritt in den Reaktor gegeben wird, welcher bereits die wässrige Siliciumdioxidnanopartikel-Dispersion enthält, die von kationischen organischen Verbindungen unter den Monomeren oder Dispergiermitteln oder Initiatoren, die als Stabilisatoren für die Siliciumdioxidnanopartikel fungieren können, frei ist,
 - die anfängliche wässrige Siliciumdioxidnanopartikel-Dispersion:

 - auf anionischen Nanopartikeln aus mit Aluminium modifiziertem Siliciumdioxid basiert und von jeglichem Kupplungsmittel frei ist,
 - in einem pH-Bereich von 2 bis 10 stabil ist, wobei Stabilität als Abwesenheit von Aggregaten und/oder Agglomeraten und/oder Sedimentation ausgedrückt wird,

 - die Emulsionspolymerisation in Gegenwart mindestens eines organischen Initiatorsystems, das von jeglichen ionischen Gruppierungen frei ist, und in Abwesenheit von kationischen Monomeren oder Initiatoren oder Dispergiermitteln durchgeführt wird.

2. Dispersion nach Anspruch 1, **dadurch gekennzeichnet, dass** der Gewichtsanteil der Modifizierung des Nanosiliciumdioxids durch Aluminium SiO2/Al2O3 im Bereich von 80/1 bis 240/1 entspricht.

3. Dispersion nach einem der Ansprüche 1 oder 2, **dadurch gekennzeichnet, dass** die Nanokompositpolymerpartikel eine Kern/Schale-Struktur aufweisen.

4. Dispersion nach einem der Ansprüche 1 bis 3, **dadurch gekennzeichnet, dass** die Größe der Siliciumdioxidnanopartikel von 5 bis 50 nm variiert (gemäß der BET-Methode).

5. Dispersion nach einem der Ansprüche 1 bis 4, **dadurch gekennzeichnet, dass** die Endgröße der Partikel der Dispersion von 50 bis 500 nm variiert.

6. Dispersion nach einem der Ansprüche 1 bis 5, **dadurch gekennzeichnet, dass** der Gesamtfeststoffgehalt der Dispersion von 10 bis 65 Gew.-% variiert (gemäß ISO-Norm 3251 bei 150°C).

7. Dispersion nach einem der Ansprüche 1 bis 6, **dadurch gekennzeichnet, dass** das Gewichtsverhältnis von Siliciumdioxid und Gesamtfeststoffgehalt von 0,1 bis 60% variiert.

8. Dispersion nach einem der Ansprüche 1 bis 7, **dadurch gekennzeichnet, dass** die Monomerenzusammensetzung bis zu 50 Gew.-% Acetoacetoxyethylmethacrylat umfasst.

9. Dispersion nach einem der Ansprüche 1 bis 8, **dadurch gekennzeichnet, dass** sie durch nachträgliche Zugabe mindestens einer Organosilanverbindung in einer Menge von bis zu 10 mmol pro g Nanosiliciumdioxid modifiziert worden ist.

**10.** Verfahren zur Herstellung einer Dispersion nach einem der Ansprüche 1 bis 9, **dadurch gekennzeichnet, dass** das Verfahren mindestens die folgenden Schritte umfasst:

i) Zugeben mindestens einer Dispersion von Nanopartikeln aus mit Aluminium modifiziertem anionischem Siliciumdioxid, die in einem pH-Bereich von 2 bis 10 stabil ist, zu einem Polymerisationsreaktor,
ii) kontinuierliches oder halbkontinuierliches Zugeben einer Monomerenzusammensetzung in mindestens einem Schritt,
iii) Polymerisation der aus den Schritten i) und ii) erhaltenen Reaktionsmischung in Gegenwart mindestens eines organischen Initiatorsystems, das von jeglichen ionischen Gruppierungen frei ist.

**11.** Verfahren nach Anspruch 10, **dadurch gekennzeichnet, dass** das Initiatorsystem entweder mit der Monomerenzusammensetzung oder separat zugegeben wird.

**12.** Verfahren nach einem der Ansprüche 10 oder 11, **dadurch gekennzeichnet, dass** die Polymerisation mindestens 2 Schritte umfasst.

**13.** Verfahren nach einem der Ansprüche 10 bis 12, **dadurch gekennzeichnet, dass** es einen Schritt der Verwendung mindestens einer wässrigen Polymerdispersion als Saat vor der Zugabe der Monomerenzusammensetzung umfasst.

**14.** Verfahren nach einem der Ansprüche 10 bis 13, **dadurch gekennzeichnet, dass** es einen zusätzlichen Schritt der nachträglichen Zugabe mindestens einer Organosilanverbindung in einer Menge von bis zu 10 mmol pro g Nanosiliciumdioxid nach der Emulsionspolymerisation umfasst.

**15.** Beschichtungszusammensetzung, **dadurch gekennzeichnet, dass** sie mindestens eine Dispersion gemäß einem der Ansprüche 1 bis 9 oder eine nach einem Verfahren gemäß einem der Ansprüche 10 bis 14 erhaltene Dispersion umfasst.

**16.** Beschichtungszusammensetzung nach Anspruch 15, **dadurch gekennzeichnet, dass** es sich dabei um eine Schutzbeschichtungszusammensetzung handelt.

**17.** Beschichtungszusammensetzung nach einem der Ansprüche 15 oder 16, **dadurch gekennzeichnet, dass** sie aus Farben oder Lacken oder Tinten oder Klebstoffen ausgewählt ist.

**18.** Verwendung der Dispersion gemäß einem der Ansprüche 1 bis 9 oder der nach einem Verfahren gemäß einem der Ansprüche 10 bis 14 erhaltenen Dispersion in Beschichtungszusammensetzungen oder als Saat von wasserdispergierbarem Nanokompositpolymer zur Herstellung von spezifischen strukturierten Latices.

**19.** Verwendung nach Anspruch 18, **dadurch gekennzeichnet, dass** es sich um eine Verwendung als Schutzbeschichtung für Holz oder dekorative Beschichtung auf Glas handelt.

**Claims**

**1.** Aqueous nanocomposite polymer dispersion obtained by emulsion polymerization of at least one monomer composition in the presence of at least one aqueous dispersion of silica nanoparticles, **characterized in that**:

- said monomer composition is added, in at least one stage, to the reactor already comprising the aqueous dispersion of silica nanoparticles which is devoid of any cationic organic compound from monomers or dispersants or initiators which can function as stabilizers of said silica nanoparticles,
- said initial aqueous dispersion of silica nanoparticles:

- is based on anionic nanoparticles of silica modified with aluminum and devoid of any coupling agent,
- is stable in a pH range extending from 2 to 10, which stability is expressed in terms of absence of aggregates and/or agglomerates and/or sedimentation,

- said emulsion polymerization is carried out in the presence of at least one organic initiator system free from any ionic group and in the absence of any cationic monomer or initiator or dispersant.

2. Dispersion according to Claim 1, **characterized in that** the degree by weight of modification of the nanosilica by the aluminum corresponds to SiO2/Al2O3 ranging from 80/1 to 240/1.

3. Dispersion according to either of Claims 1 and 2, **characterized in that** the nanocomposite polymer particles have a core/shell structure.

4. Dispersion according to one of Claims 1 to 3, **characterized in that** the size of said silica nanoparticles varies from 5 to 50 nm (according to BET method).

5. Dispersion according to one of Claims 1 to 4, **characterized in that** the final size of the particles of said dispersion varies from 50 to 500 nm.

6. Dispersion according to one of Claims 1 to 5, **characterized in that** the overall solids content of said dispersion varies from 10 to 65% by weight (according to Standard ISO 3251, at 150°C).

7. Dispersion according to one of Claims 1 to 6, **characterized in that** the ratio by weight of the silica to the overall solids content varies from 0.1 to 60%.

8. Dispersion according to one of Claims 1 to 7, **characterized in that** said monomer composition comprises up to 50% by weight of acetoacetoxyethyl methacrylate.

9. Dispersion according to one of Claims 1 to 8, **characterized in that** it has been modified by postaddition of at least one organosilane compound at up to 10 mmol per g of nanosilica.

10. Process for the preparation of a dispersion according to one of Claims 1 to 9, **characterized in that** said process comprises at least the following stages:

    i) addition to a polymerization reactor of at least one dispersion of nanoparticles of anionic silica modified with aluminum which is stable in a pH range extending from 2 to 10,
    ii) continuous or semicontinuous addition of a monomer composition in at least one stage,
    iii) polymerization of the reaction mixture resulting from stages i) and ii) in the presence of at least one organic initiator system free from any ionic group.

11. Process according to Claim 10, **characterized in that** the initiator system is added either with the monomer composition or separately.

12. Process according to either of Claims 10 and 11, **characterized in that** the polymerization comprises at least two stages.

13. Process according to one of Claims 10 to 12, **characterized in that** it comprises a stage of use of at least one aqueous polymer dispersion as seed, before the addition of said monomer composition.

14. Process according to one of Claims 10 to 13, **characterized in that** it comprises an additional stage of postaddition, after emulsion polymerization, at up to 10 mmol per g of nanosilica, of at least one organosilane compound.

15. Coating composition, **characterized in that** it comprises at least one dispersion as defined according to one of Claims 1 to 9 or obtained according to a process as defined according to one of Claims 10 to 14.

16. Coating composition according to Claim 15, **characterized in that** it is a protective coating composition.

17. Coating composition according to either of Claims 15 and 16, **characterized in that** it is selected from paints or varnishes or inks or adhesives.

18. Use of the dispersion as defined according to either of Claims 1 to 19 or obtained according to a process as defined according to one of Claims 10 to 14 in coating compositions or as water-dispersible nanocomposite polymer seed in the preparation of specific structured latexes.

19. Use according to Claim 18, **characterized in that** it is the use of protective coating for wood or of decorative coating

on glass.

**FIG. 1**

**FIG. 2**

**FIG. 3**

**Figure 4a**

**Figure 4b**

**FIG. 5**

**FIG. 6**

## RÉFÉRENCES CITÉES DANS LA DESCRIPTION

**Documents brevets cités dans la description**

- WO 01029106 A
- WO 03000760 A
- WO 01018081 A

- WO 04035473 A
- WO 04035474 A
- US 20050020746 A